# FASCICULE DE BREVET EUROPEEN

(11) **EP 1 617 208 B1**
(45) Date de publication et mention de la délivrance du brevet: **14.07.2010**
(21) Numéro de dépôt: 05300425.5
(22) Date de dépôt: 27.05.2005
(51) Int. Cl.: G01N 21/90, B07C 5/12, B07C 5/34

(54) **Machine pour détecter des défauts d'un objet transparent ou translucide**
Vorrichtung zur Detektion von Fehlern eines transparenten oder durchscheinenden Objektes
Device for detecting defects of a transparent or translucent object

(30) Priorité: 13.07.2004 FR 0451526
(43) Date de publication de la demande: 18.01.2006
(73) Titulaire: IRIS - INSPECTION MACHINES, 69200 VENISSIEUX (FR)
(72) Inventeur: Volay, Philippe, 69290, SAINT GENIS LES OLLIERES (FR); Ougier, Thierry, 69700, ST JEAN DE TOULAS (FR)
(74) Mandataire: Palix, Stéphane

(56) Documents cités:
- EP-A- 0 957 355
- EP-A- 1 176 416
- FR-A1- 2 301 006
- US-A- 4 691 231
- US-A- 5 729 340
- US-A- 5 926 268
- US-A- 6 031 221

## Description

### Domaine Technique

L'invention se rapporte au domaine de la production à cadence élevée d'objets transparents ou translucides, et notamment de bouteilles ou flacons en verre. Ce type d'industrie nécessite des moyens d'acquisition d'image très rapide pour inspecter les objets défilant sur la chaîne de production et ainsi mettre au rebut les objets non conformes.

Elle vise plus particulièrement une machine pour acquérir et analyser des images d'un objet et détecter la présence d'un défaut.

De façon générale, dans la suite de la description et pour une meilleure compréhension de l'invention, on considérera l'invention dans son application au traitement des bouteilles en verre. Bien entendu, l'invention ne se limite pas à l'inspection des bouteilles de verre mais couvre tout type d'objet transparent ou translucide.

### Art antérieur

De façon générale, pour détecter des défauts à l'intérieur d'une bouteille disposée sur un convoyeur et défilant très rapidement, on place une pluralité de caméras agencées avec un angle différent au regard d'une ou plusieurs sources lumineuses. Par conséquent, l'image analysée par les différentes caméras résulte de la lumière transmise au travers de la bouteille, avec tous les phénomènes de réflexion, transmission et diffraction provoqués par la géométrie de la bouteille, et notamment ses éventuels défauts.

Il existe des machines d'inspections comportant des sources lumineuses étendues de type tube néon, combinées à des caméras linéaires avec diaphragmes, tel que décrits dans les documents FR 2 301 006 et EP 0957 355. Dans ce type de machine, les caméras sont toutes orientées vers le centre de la source lumineuse de façon à recevoir le maximum de lumière, et éviter les zones d'ombres. En effet, ces zones d'ombres ne sont pas exploitables pour y détecter des défauts. Ce type de caméra linéaire ne peut pas être compatible avec les chaînes de contrôle à débit élevé, et les chaînes actuelles se doivent d'être équipées de caméras matricielles.

Cependant, avec l'emploi de caméras matricielles, l'utilisation d'une source de lumière étendue pose de nombreux problèmes et notamment au niveau de la présence de reflets. En effet, l'intensité lumineuse qui peut être transmise par réflexion est très importante et génère alors des zones blanches d'éblouissement au niveau de l'image acquise. Il n'est alors pas possible de détecter de défaut à l'intérieur de ces zones blanches, qui ne sont donc pas inspectées correctement.

Il a également été conçu des systèmes dans lesquels les caméras matricielles sont associées à une source lumineuse indépendante, disposée de l'autre coté du convoyeur par rapport à chaque caméra et perpendiculairement à la source, comme dans les documents US 4 026 656. Dans ce type de machine, la source émet une lumière de forte intensité pendant un temps très court, tel un flash, et ce à chaque acquisition d'image. Les sources sont synchronisées entre elles pour ne pas s'allumer en même temps et ainsi éviter les phénomènes de reflets. En effet, ces reflets apparaissent lorsque la lumière émise par une source est réfléchie sur les parois de la bouteille. L'image acquise par une caméra autre que celle qui se situe directement en regard est dans ce cas faussée, car elle prend en compte ces reflets parasites. De telles machines comportent entre 4 et 6 caméras, ce qui implique l'utilisation de 4 à 6 sources synchronisées dont le coût est donc très important.

Dans ce type de machines d'inspection, et tel que décrit dans le document et US 4 691 231, les bords du champ utile des caméras situées en entrée et en sortie peuvent être inclinés par rapport à la normale à la direction d'avancement du convoyeur mais ils sont toujours agencés au niveau d'une zone centrale de la source lumineuse.

Un tel agencement des différentes caméras par rapport à la source n'est pas optimum, puisque la lumière captée par les caméras peut être directement réfléchie à la surface de l'objet et non transmise au travers de ses parois. Cette réflexion génère alors des zones blanches impossible à analyser pour y détecter d'éventuels défauts.

On connaît également des machines, telles que décrites dans les documents US 5 729 340 US 6 031 221 et US 6 452 156, qui nécessitent donc un plus grand nombre de sources lumineuses indépendantes, et notamment des diodes à haute intensité, dont l'éclairage et l'extinction doivent être très rapides et synchronisés. De telles machines sont donc complexes à mettre en oeuvre et sont très onéreuses.

Un objectif est donc de réduire le nombre de sources mais également d'utiliser des sources meilleur marché. Ainsi, on connaît des sources de lumière étendue et homogène, telles que des tubes néon. Dans les machines comportant ce type de sources, il n'est pas possible d'éteindre et de rallumer la source lumineuse à chaque acquisition d'image par les caméras. Une telle machine a comme inconvénient, tel que précédemment décrit, de générer des reflets puisque la lumière est émise de façon étendue et continue. Ainsi, une telle machine présente des limites car elle ne permet pas détecter les défauts présents dans les zones blanches engendrées par les reflets.

Le but de l'invention est donc de permettre d'utiliser une source lumineuse et un système de gestion de cette source qui soit très peu coûteuse et simple à mettre en oeuvre, tout en permettant de réaliser des acquisitions d'image au moyen de plusieurs caméras matricielles selon différents angles d'incidence. Cette acquisition doit être réalisée de plus sur la totalité de chaque bouteille de telle sorte qu'il ne subsiste pas de zone inexploitable pour identifier et localiser un défaut.

### Exposé de l'invention

L'invention concerne donc une machine pour détecter des défauts d'une bouteille transparente ou translucide positionnée sur un convoyeur apte à conférer à celle-ci un mouvement de translation selon une direction d'avancement. La bouteille comporte une base dont le déplacement définit un plan d'avancement du convoyeur. Une telle machine inclut un dispositif formant un sous-ensemble d'acquisition d'image. De façon connue, le sous-ensemble comporte :
- une source lumineuse étendue et homogène, agencée parallèlement au convoyeur le long d'un premier côté et destinée à éclairer la bouteille ;
- au moins une caméra matricielle apte à capter une image de la bouteille lorsque celui-ci passe dans le champ utile de la caméra, cette caméra étant positionnée du côté opposé à la source lumineuse par rapport au convoyeur pour analyser la lumière transmise au travers de la bouteille, et présentant un axe de visée, dont l'orientation, dans un plan parallèle au plan d'avancement du convoyeur, est inclinée par rapport à une normale à la direction d'avancement.

Conformément à l'invention, la machine se **caractérise en ce que**, dans un plan parallèle au plan d'avancement du convoyeur, le bord du champ utile de la camera située en entrée du sous-ensemble passe à une distance de l'extrémité avant de la source lumineuse inférieure à la dimension maximale de l'objet. De même, conformément à l'invention, et par analogie, la machine se **caractérise en ce que**, dans un plan parallèle au plan d'avancement du convoyeur, le bord du champ utile de la camera située en sortie du sous-ensemble passe à une distance de l'extrémité arrière de la source lumineuse inférieure à la dimension maximale de l'objet

Autrement dit, l'axe de visée de la caméra n'est pas dirigé vers une zone centrale de la source lumineuse comme conventionnellement, ce qui a pour conséquence d'éviter les reflets et les zones blanches lors de l'acquisition d'image. Ainsi, l'acquisition de l'image est réalisée lorsque la bouteille se trouve à proximité de l'une des extrémités de la source lumineuse de sorte que cette source ne peut pas générer de reflets sur la face de la bouteille orientée vers l'extérieur de la source. L'acquisition de l'image peut se faire ainsi en entrée ou en sortie du sous-ensemble avec une tolérance correspondant à la dimension maximale de la bouteille. Cette dimension maximale est mesurée parallèlement au plan d'avancement du convoyeur et peut correspondre à un diamètre lorsque la forme extérieure de la bouteille est cylindrique. Elle peut également correspondre à une largeur lorsque la forme extérieure de la bouteille comporte une portion prismatique.

Lorsque une machine permet d'inspecter une large gamme de bouteille, cette dimension maximale de l'objet peut parfois varier entre 20 et 120 millimètres. Dans ce cas, la distance à prendre en considération est celle qui correspond au plus petit article de la gamme. En pratique, la machine est réglée de façon à ce que le bord du champ utile de la caméra passe à une distance de l'extrémité de la source lumineuse inférieure à la plus petite des dimensions maximales de la gamme de bouteilles inspectées par cette machine.

En pratique, le sous-ensemble peut comporter, au niveau de l'une des extrémités de la source lumineuse, une caméra haute et une caméra basse, dont l'un des bords de leur champ utile respectif passe à une distance de l'extrémité de la source lumineuse inférieure à la dimension maximale de la bouteille.

De cette manière, il est possible de fragmenter la bouteille en plusieurs images à analyser dans le sens de la hauteur. Les images pouvant être réalisées avec un axe de visée plongeant pour la caméra haute et un axe de visée en contre-plongée pour la caméra basse.

Avantageusement, le sous-ensemble peut comporter deux groupes de deux caméras, chaque groupe comportant une caméra haute et une caméra basse, positionnés chacun à proximité d'une extrémité avant et arrière de la source lumineuse.

En d'autres termes, un tel sous-ensemble comporte quatre caméras de façon à prendre des bouteilles selon quatre angles de vue différents et ainsi détecter le maximum de défauts possibles. Ainsi, le sous-ensemble comporte une caméra haute et une caméra basse au niveau du côté entrant du sous-ensemble, mais également une caméra haute et une caméra basse au niveau du côté sortant de ce même sous-ensemble.

Avantageusement, dans un plan parallèle au plan d'avancement du convoyeur, l'orientation des axes de visée des deux caméras peut être différente, pour les deux caméras haute et basse.

Autrement dit, les images réalisées par la caméra haute et la caméra basse peuvent être acquises à des instants différents, correspondant à des positions différentes de la bouteille se déplaçant avec le convoyeur.

En pratique, la caméra haute peut être agencée sur un support motorisé mobile en translation verticale. Ainsi, il est possible d'adapter la position de l'axe de visée en fonction de différents paramètres, et notamment de la forme et de la hauteur de la bouteille. La caméra haute est ainsi agencée de façon à ce que son déplacement soit commandé de manière automatique en utilisant notamment un moteur électrique.

Selon une variante de l'invention, l'axe de visée de l'une des caméras peut être déviée au moyen d'un miroir. Dans ce cas, le miroir peut être agencé sur un support motorisé mobile en rotation. Ainsi, la caméra peut rester fixe dans une position bien déterminée et le déplacement du miroir peut permettre d'adapter l'incidence de l'axe de visée sur la bouteille transparente.

De façon préférée, on règle l'orientation de l'axe de visée de la caméra haute de telle sorte qu'elle est perpendiculaire à la surface extérieure d'une partie haute de la bouteille.

De cette manière, on adapte l'orientation de l'axe de visée en fonction d'une partie haute de la bouteille, également être appelée le « col » de la bouteille, et qui présente des courbures dans deux directions. Cette zone est particulièrement délicate à inspecter, car de nombreuses zones d'ombre peuvent être générées par la bague de la bouteille notamment.

Conformément à l'invention, la machine pour détecter des défauts d'une bouteille transparente ou translucide peut comporter deux sous-ensembles tels que précédemment décrits. Ces sous-ensembles sont agencés de part et d'autre du convoyeur de manière inversée.

En d'autres termes, la machine d'inspection de bouteilles peut être conçue pour détecter les défauts au niveau de deux faces opposés de la bouteille.

Avantageusement, à l'intérieur de la machine, les sous-ensembles peuvent être équipés de volets pour interdire les interférences dues à la réflexion de la lumière sur les bouteilles transparentes entre les deux sous-ensembles.

Autrement dit, le bord des extrémités adjacentes des sources lumineuses peut être équipé d'un cache pour empêcher que la lumière, provenant d'un sous-ensemble en amont, se réfléchisse sur une face de bouteille et perturbe l'autre sous-ensemble.

En pratique, les sous-ensembles peuvent comporter chacun une paire de caméras supplémentaires. Ces caméras supplémentaires sont agencées, au niveau de chaque sous-ensemble, l'une au dessus de l'autre et comportent chacune un axe de visée dont l'orientation est perpendiculaire à la direction d'avancement.

Ainsi, une telle machine comporte par conséquent douze caméras d'inspection, à savoir pour chacun des deux sous-ensembles, trois paires de deux caméras positionnées l'une au dessus de l'autre :
- la première paire de caméras comportant des axes de visée orientés au niveau de l'extrémité avant de la source lumineuse,
- une seconde paire de caméras comportant des axes de visée orientés perpendiculairement à la direction d'avancement au niveau d'une zone centrale de la source lumineuse, et
- une troisième paire de caméras comportant des axes de visée orientés au niveau de l'extrémité arrière de la source lumineuse.

### Description sommaire des figures

La manière de réaliser l'invention et les avantages qui en découlent, ressortiront bien de la description du mode de réalisation qui suit, donné à titre indicatif mais non limitatif, à l'appui des figures annexées dans lesquelles :
- la figure 1 est vue de dessus d'une machine d'inspection, conformément à l'art antérieur ;
- les figures 2 à 4 sont des figures de dessus de plusieurs variantes du sous-ensemble, conformément à l'invention ;
- la figure 5 est une vue de profil schématique du sous-ensemble , conformément à l'invention ;
- les figures 6 à 7 sont des vues détaillées de profil selon deux variantes de l'invention ;
- la figure 8 est une vue de dessus d'une machine, conforme à l'invention.

### Manière de décrire l'invention

Comme déjà évoqué, l'invention concerne une machine d'inspection pour détecter des défauts d'une bouteille transparente ou translucide.

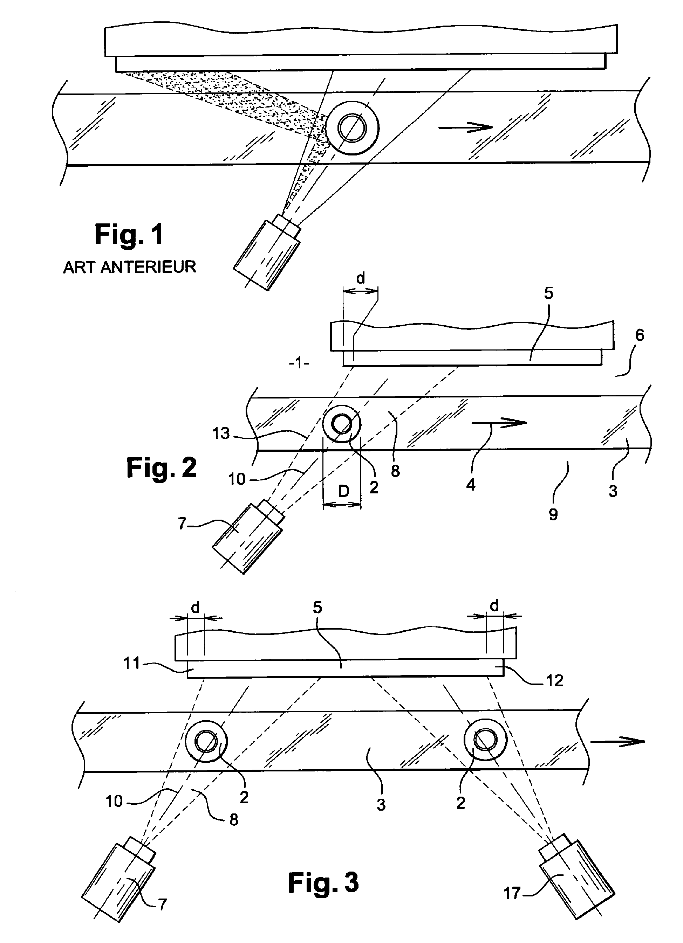

La figure 1, représentative de l'art antérieur, monte le phénomène de réflexion qui se produit sur les machines d'inspection utilisant actuellement des sources de lumière étendue. La lumière est donc réfléchie sur la bouteille puis est capté par la caméra. Cette réflexion génère alors une zone blanche au niveau de l'image acquise et l'impossibilité de localiser les défauts dans cette zone.

Tel que représenté en figure 2, le sous-ensemble (1) permet d'inspecter une bouteille (2) positionnée sur un convoyeur (3). Les bouteilles (2) défilent selon une direction d'avancement (4) devant une source lumineuse (5) se présentant sous la forme d'une source homogène étendue telle un tube néon. Cette source lumineuse est positionnée d'un premier côté (6) du convoyeur (3), tandis que la caméra (7) est positionnée du côté opposé (9) du convoyeur (3). Par conséquent, une image analysée par la caméra (7) correspond à la lumière transmise au travers de la bouteille (2).

Selon l'invention, le bord (13) du champ utile (8) de la caméra passe à une distance (d) de l'extrémité de l'un des bords de la source lumineuse inférieure à la dimension maximale (D) de la bouteille (2). Tel que représenté, l'axe de visée (10) de la caméra (7) est incliné dans le plan d'avancement du convoyeur (3) et par rapport à la normale à cette direction d'avancement (4), pour observer la bouteille par l'arrière.

La gamme des bouteilles inspectées avec une telle machine peut être très large et dans ce cas, la caméra (7) est positionnée de façon à ce que la distance (d) soit inférieure la plus petite dimension maximale (D) de la gamme de bouteilles (2) inspectées. Par exemple si la dimension (D) de la gamme de bouteilles (2) varie entre 20 et 120 millimètres, l'orientation des caméras est avantageusement réglée de façon à ce que la distance (d) soit inférieure à 20 millimètres.

De façon plus générale, on conçoit que les effets de reflets parasites sont fonction des rayons de courbures de la bouteille, qui peut être très faible dans des bouteilles de forme prismatique. Ainsi, la distance caractéristique peut être déterminée en prenant en compte ces rayons de courbure, pour les bouteilles de section complexe.

On prend alors l'image de la bouteille (2) dès que l'intégralité de la bouteille est dans le champ (8). Ainsi on attend pas qu'elle atteigne le centre du champ. De cette manière, on limite les reflets qui pourraient être générés par la zone centrale de la source lumineuse (5).

Tel que représenté en figure 3, le sous-ensemble peut comporter deux caméras (16,17) positionnées au niveau de l'extrémité avant (11) de la source lumineuse et de l'extrémité arrière (12). De cette manière, une bouteille (2) positionnée sur le convoyeur (3) est inspectée à des instants différents par les deux caméras (16,17) avec des angles d'incidence différents.

Dans ce cas, la caméra (17) prend l'image de la bouteille (2) lorsque celle ci est voisine du bord du champ qui passe à la distance (d) de l'extrémité (12) de la source lumineuse (5).

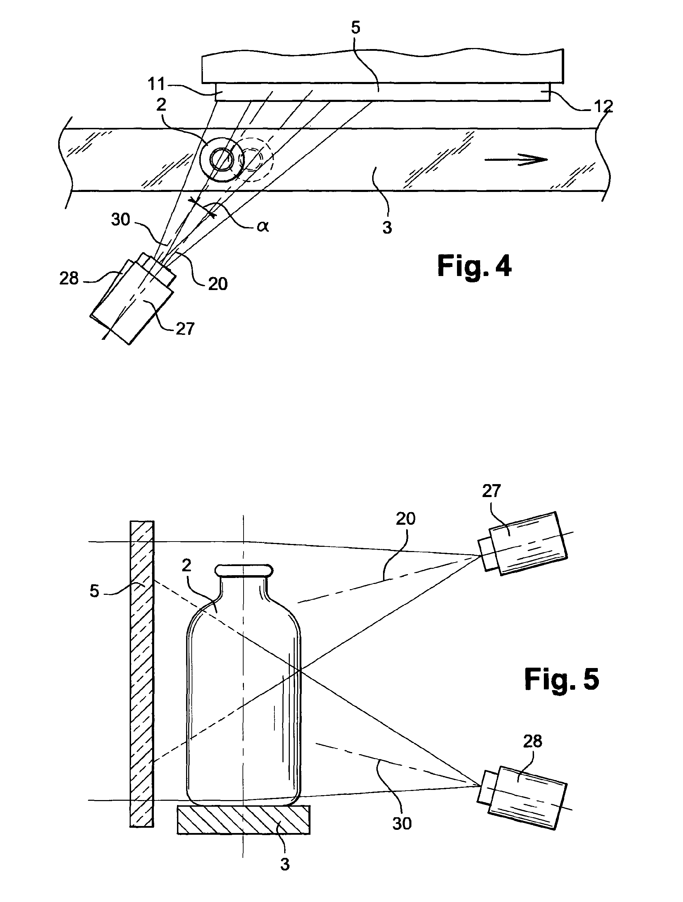

Tel que représenté à la figure 4, le sous-ensemble peut comporter au niveau de la même extrémité (11, 12) de la source lumineuse (5) deux caméras superposées, une caméra haute (27) et une caméra basse (28) agencées pour fractionner la bouteille (2) en plusieurs zones à analyser. Les axes de visée (20,30) de ces deux caméras (27,28) ne sont pas obligatoirement dans un même plan perpendiculaire au plan d'avancement du convoyeur (3). Ils peuvent ainsi être décalés d'un angle α de façon à ce que les bords (13,14) des champs utiles des deux caméras (27,28) passent à une distance de l'extrémité (11, 12) de la source lumineuse (5) inférieure à la dimension maximale de la bouteille (2).

Telle que représentée en figure 5, la caméra haute (27) est agencée avec un axe de visée (20) qui est plongeant vers le bas. De façon opposée, la caméra basse (28) possède un axe de visée (30) en contre-plongée. Les deux images fournies par les caméras (27, 28) permettent alors d'inspecter totalement la bouteille (2) sur toute sa hauteur en le fractionnant en deux images.

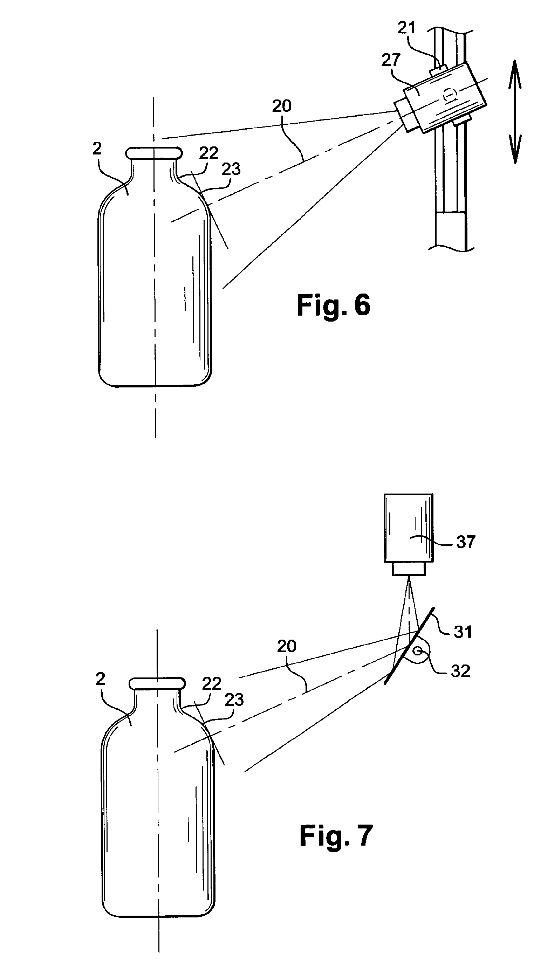

Telle que représentée à la figure 6, la caméra haute (27) peut être rapportée sur un support motorisé (21) mobile en translation verticale. De cette manière, il est possible d'orienter l'axe de visée (20) en fonction d'une partie haute (23) de la bouteille (2). Afin d'éviter des zones d'ombre au niveau de cette zone (23) qui présente une courbure prononcée, il est avantageux de positionner la caméra (27) et donc son axe de visée (20) perpendiculairement à la surface extérieure (22) de la bouteille (2). De cette manière, on évite la présence de zones d'ombre due à la bague de la bouteille (2) au niveau de son col.

Tel que représenté en figure 7 et selon une autre variante, il est également possible de régler le positionnement de l'axe de visée (20) perpendiculairement à la surface extérieure (22) de la bouteille (2), au moyen d'un miroir (31). Dans ce cas, la caméra haute (37) est orientée verticalement vers le bas. Elle est immobile et c'est le mouvement du miroir (31) motorisé en rotation qui permet d'effectuer ce réglage du positionnement de l'axe de visée (20).

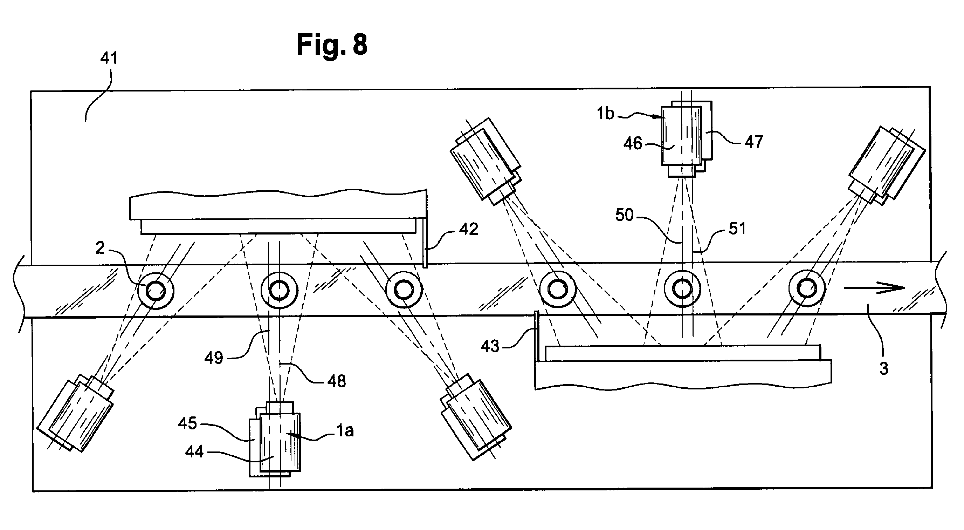

Telle que représentée en figure 8, une machine (41) peut être équipée de deux sous-ensembles (1a,1b) tels que précédemment décrits. Ces deux sous-ensembles sont alors agencés de manière opposée par rapport au convoyeur (3) de façon à permettre l'inspection de deux faces d'une bouteille (2).

De façon à réduire l'encombrement de la machine (41), il est avantageux de rapprocher au maximum les deux sous-ensembles (1a,1b) pour gagner en compacité. Cependant, cet agencement peut également générer des phénomènes d'interférence entre les deux sous-ensembles dus à la réflexion de la lumière sur les bouteilles (2). Des volets (42,43) peuvent permettre d'éviter ce problème en masquant les extrémités adjacentes des deux sources lumineuses correspondantes.

Telle qu'illustrée, la machine (41) comporte avantageusement douze caméras par groupes de six dans chaque sous-ensemble (1a,1b). En effet, chaque sous-ensemble comporte une paire de caméras supplémentaires (44,45) et (46,47), agencées de manière à ce que les axes de visée (48,49) et (50,51) soient orientés au niveau d'une zone centrale des deux sources lumineuses. Ces axes de visée sont alors perpendiculaires à la direction d'avancement (4) du convoyeur (3).

Il ressort de ce qui précède qu'une machine conforme à l'invention présente de multiples avantages, et notamment elle permet :
- de réaliser un système d'inspection peu onéreux grâce à des sources lumineuses bon marché ;
- une gestion simplifiée au niveau de l'alimentation de la source lumineuse, ce qui simplifie de manière importante sa conception ;
- d'obtenir des images totalement exploitables qui ne présentent aucune zone blanche ;
- de détecter tous les défauts grâce aux deux angles de visée.

## Revendications

1. Machine pour la détection de défauts d'un objet (2) transparent ou translucide positionné sur un convoyeur apte à conférer à l'objet (2) un mouvement de translation selon une direction d'avancement (4), ledit objet (2) comportant une base dont le déplacement défini un plan d'avancement du convoyeur (3), incluant un dispositif formant un sous-ensemble (1) d'acquisition d'image, ledit sous-ensemble (1) comportant :
• une source lumineuse (5) étendue et homogène, agencée parallèlement au convoyeur (3) le long d'un premier côté (6) et destinée à éclairer l'objet (2) ;
• au moins une caméra matricielle (7) apte à capter une image de l'objet (2) lorsque celui-ci passe dans le champ utile (8) de la camera (7), ladite caméra (7) étant positionnée du côté opposé (9) à la source lumineuse (5) par rapport au convoyeur (3) pour analyser la lumière transmise au travers de l'objet (2), et présentant un axe de visée (10, 20, 30), dont l'orientation, dans un plan parallèle au plan d'avancement du convoyeur (3), est inclinée par rapport à une normale à la direction d'avancement (4) ;
**caractérisée en ce que,** dans un plan parallèle au plan d'avancement du convoyeur (3), le bord (13) du champ utile (8) de la camera (7) située en entrée du sous-ensemble (1) passe à une distance (d) de l'extrémité avant (11) de la source lumineuse (5) inférieure à la dimension maximale (D) de l'objet (2).

2. Machine pour la détection de défauts d'un objet (2) transparent ou translucide positionné sur un convoyeur apte à conférer à l'objet (2) un mouvement de translation selon une direction d'avancement (4), ledit objet (2) comportant une base dont le déplacement défini un plan d'avancement du convoyeur (3), incluant un dispositif formant un sous-ensemble (1) d'acquisition d'image, ledit sous-ensemble (1) comportant :
• une source lumineuse (5) étendue et homogène, agencée parallèlement au convoyeur (3) le long d'un premier côté (6) et destinée à éclairer l'objet (2) ;
• au moins une caméra matricielle (7) apte à capter une image de l'objet (2) lorsque celui-ci passe dans le champ utile (8) de la camera (7), ladite caméra (7) étant positionnée du côté opposé (9) à la source lumineuse (5) par rapport au convoyeur (3) pour analyser la lumière transmise au travers de l'objet (2), et présentant un axe de visée (10, 20, 30), dont l'orientation, dans un plan parallèle au plan d'avancement du convoyeur (3), est inclinée par rapport à une normale à la direction d'avancement (4) ;
**caractérisée en ce que**, dans un plan parallèle au plan d'avancement du convoyeur (3), le bord du champ utile (8) de la camera (7) située en sortie du sous-ensemble (1) passe à une distance (d) de l'extrémité arrière (12) de la source lumineuse (5) inférieure à la dimension maximale (D) de l'objet (2).

3. Machine selon l'une des revendications 1 ou 2, **caractérisée en ce que** le sous-ensemble (1) comporte, au niveau de l'une des extrémités (11, 12) de la source lumineuse (5), une caméra haute (27) et une caméra basse (28) dont l'un des bords (13, 14) de leur champ utile (8, 18) respectif passe à une distance de l'extrémité (11, 12) de la source lumineuse (5) inférieure à la dimension maximale de l'objet (2).

4. Machine selon la revendication 3, **caractérisée en ce que** le sous-ensemble (1) comporte deux groupes de deux caméras (27, 28), chaque groupe comportant une caméra haute (27) et une caméra basse (28), positionnés chacun à proximité d'une extrémité (11, 12) de la source lumineuse (5).

5. Machine selon la revendication 3, **caractérisée en ce que**, dans un plan parallèle au plan d'avancement du convoyeur (3), l'orientation des axes de visée (20, 30) des deux caméras (27, 28) est différente.

6. Machine selon la revendication 3, **caractérisée en ce que** la caméra haute (27) est agencée sur un support motorisé (31) mobile en translation verticale.

7. Machine selon la revendication 3, **caractérisée en ce que** l'axe de visée (20) de la caméra haute (37) est dévié au moyen d'un miroir (31).

8. Machine selon la revendication 7, **caractérisée en ce que** le miroir (31) est agencé sur un support motorisé (32) mobile en rotation.

9. Machine selon la revendication 3, **caractérisée en ce que** l'orientation de l'axe de visée (20) de la caméra haute (27, 37), est perpendiculaire à la surface extérieure (22) d'une partie haute (23) de l'objet (2).

10. Machine selon l'une des revendications 1 ou 2, **caractérisée en ce qu'**elle comporte deux sous-ensembles (1a, 1b) agencés de part et d'autre du convoyeur (3) de manière inversée.

11. Machine selon la revendication 10, **caractérisée en ce que** les sous-ensembles (1a, 1b) sont équipés de volets (42, 43) pour interdire les interférences dues à la réflexion de la lumière sur les objets (2) transparents entre les deux sous-ensembles (1a, 1b).

12. Machine selon la revendication 10, **caractérisée en ce que** les sous-ensembles (1a, 1b) comportent chacun une paire de caméras supplémentaires (44, 45) et (46, 47), lesdites caméras supplémentaires (44, 45) et (46, 47) étant agencées, au niveau de chaque sous-ensemble (1a, 1b), l'une au dessus de l'autre et comportant chacune un axe de visée (48, 49) et (50, 51) dont l'orientation est perpendiculaire à la direction d'avancement.

## Claims

1. Machine for detecting defects of a transparent or translucent object (2) placed on a conveyor capable of conferring on the object (2) a travelling motion along a direction of advance (4), said object (2) comprising a base whereof the movement defines a plane of advance of the conveyor (3), including a device forming an image acquisition sub-assembly (1), said sub-assembly (1) comprising:
• an extended and homogenous light source (5), arranged parallel to the conveyor (3) along a first side (6) and intended to illuminate the object (2);
• at least one matrix camera (7) capable of catching an image of the object (2) when it passes into the useful field (8) of the camera (7), said camera (7) being placed on the side opposite (9) to the light source (5) relative to the conveyor (3) in order to analyse the light transmitted through the object (2), and having a viewing angle (10, 20, 30), whereof the orientation, in a plane parallel to the plane of advance of the conveyor (3) is at an angle relative to a norm to the direction of advance (4);
**characterised in that**, in a plane parallel to the plane of advance of the conveyor (3), the edge (13) of the useful field (8) of the camera (7) located at the input of the sub-assembly (1) passes at a distance (d) from the front end (11) of the light source (5) that is less than the maximum dimension (D) of the object (2).

2. Machine for detecting defects of a transparent or translucent object (2) placed on a conveyor capable of conferring on the object (2) a travelling motion along a direction of advance (4), said object (2) comprising a base whereof the movement defines a plane of advance of the conveyor (3), including a device forming an image acquisition sub-assembly (1), said sub-assembly (1) comprising:
• an extended and homogenous light source (5), arranged parallel to the conveyor (3) along a first side (6) and intended to illuminate the object (2);
• at least one matrix camera (7) capable of catching an image of the object (2) when it passes in the useful field (8) of the camera (7), said camera (7) being placed on the side opposite (9) to the light source (5) relative to the conveyor (3) in order to analyse the light transmitted through the object (2), and having a viewing angle (10, 20, 30), whereof the orientation, in a plane parallel to the plane of advance of the conveyor (3) is at an angle relative to a norm to the direction of advance (4);
**characterised in that,** in a plane parallel to the plane of advance of the conveyor (3), the edge of the useful field (8) of the camera (7) located at the output of the sub-assembly (1) passes at a distance (d) from the rear end (12) of the light source (5) that is less than the maximum dimension (D) of the object (2).

3. Machine as claimed in one of claims 1 or 2, **characterised in that** the sub-assembly (1) comprises, at one of the ends (11, 12) of the light source (5), a high camera (27) and a low camera (28) whereof one of the edges (13, 14) of their respective useful field (8, 18) passes at a distance from the end (11, 12) of the light source (5) that is less than the maximum dimension of the object (2).

4. Machine as claimed in claim 3, **characterised in that** the sub-assembly (1) comprises two groups of two cameras (27, 28), each group comprising a high camera (27) and a low camera (28), each placed in proximity to one end (11, 12) of the light source (5).

5. Machine as claimed in claim 3, **characterised in that**, in a plane parallel to the plane of advance of the conveyor (3), the orientation of the viewing axes (20, 30) of the two cameras (27, 28) is different.

6. Machine as claimed in claim 3, **characterised in that** the high camera (27) is arranged on a vertically mobile motor-driven stand (31).

7. Machine as claimed in claim 3, **characterised in that** the viewing axis (20) of the high camera (37) is deflected by means of a mirror (31).

8. Machine as claimed in claim 7, **characterised in that** the mirror (31) is arranged on a rotationally mobile motor-driven stand (32).

9. Machine as claimed in claim 3, **characterised in that** the orientation of the viewing axis (20) of the high camera (27, 37), is perpendicular to the external surface (22) of a high part (23) of the object (2).

10. Machine as claimed in one of claims 1 or 2, **characterised in that** it comprises two sub-assemblies (1a, 1b) arranged on either side of the conveyor (3) in a reversed way.

11. Machine as claimed in claim 10, **characterised in that** the sub-assemblies (1a, 1b) are fitted with shutters (42, 43) to prevent interference due to a reflection of the light on the transparent objects (2) between the two sub-assemblies (1a, 1b).

12. Machine as claimed in claim 10, **characterised in that** the sub-assemblies (1a, 1b) each comprise a pair of additional cameras (44, 45) and (46, 47), said additional cameras (44, 45) and (46, 47) being arranged, in each sub-assembly (1a, 1b), one over the other and each comprising a viewing axis (48, 49) and (50, 51) whereof the orientation is perpendicular to the direction of advance.

## Patentansprüche

1. Maschine zum Erfassen von Fehlern eines transparenten oder durchscheinenden Objekts (2), das auf einem Förderer angeordnet ist, der das Objekt (2) in eine Translationsbewegung in einer Vorschubrichtung (4) versetzen kann, wobei das Objekt (2) eine Basis umfasst, deren Bewegung eine Vorschubebene des Förderers (3) definiert, umfassend eine eine Untereinheit (1)zur Bilderfassung bildende Vorrichtung, wobei diese Untereinheit (1) umfasst:
■ eine ausgedehnte und homogene Lichtquelle (5), die parallel zum Förderer (3) längs einer ersten Seite (6) angeordnet ist und dazu bestimmt ist, das Objekt (2) zu beleuchten;
■ mindestens eine Matrixkamera (7), die ein Bild des Objekts (2) aufnehmen kann, wenn dieses das Nutzfeld (8) der Kamera (7) passiert, wobei die Kamera (7) bezüglich des Förderers (3) auf der der Lichtquelle (5) entgegengesetzten Seite (9) angeordnet ist, um das durch das Objekt (2) hindurch übertragene Licht zu analysieren, und eine Zielachse (10, 20, 30) aufweist, deren Ausrichtung in einer zur Vorschubebene des Förderers (3) parallelen Ebene gegen eine Senkrechte auf die Vorschubrichtung (4) geneigt ist;
**dadurch gekennzeichnet, dass** der Rand (13) des Nutzfeldes (8) der am Eintritt der Untereinheit (1) gelegenen Kamera (7) in einer zur Vorschubebene des Förderers (3) parallelen Ebene in einem Abstand (d) vom vorderen Ende (11) der Lichtquelle (5) verläuft, der kleiner als die maximale Abmessung (D) des Objekts (2) ist.

2. Maschine zum Erfassen von Fehlern eines transparenten oder durchscheinenden Objekts (2), das auf einem Förderer angeordnet ist, der das Objekt (2) in eine Translationsbewegung in einer Vorschubrichtung (4) versetzen kann, wobei das Objekt (2) eine Basis umfasst, deren Bewegung eine Vorschubebene des Förderers (3) definiert, umfassend eine eine Untereinheit (1) zur Bilderfassung bildende Vorrichtung, wobei die Untereinheit (1) umfasst:
■ eine ausgedehnte und homogene Lichtquelle (5), die parallel zum Förderer (3) längs einer ersten Seite (6) angeordnet ist und dazu bestimmt ist, das Objekt (2) zu beleuchten;
■ mindestens eine Matrixkamera (7), die ein Bild des Objekts (2) aufnehmen kann, wenn dieses das Nutzfeld (8) der Kamera (7) passiert, wobei die Kamera (7) bezüglich des Förderers (3) auf der der Lichtquelle (5) entgegengesetzten Seite (9) angeordnet ist, um das durch das Objekt (2) hindurch übertragene Licht zu analysieren, und eine Zielachse (10, 20, 30) aufweist, deren Ausrichtung in einer zur Vorschubebene des Förderers (3) parallelen Ebene gegen eine Senkrechte auf die Vorschubrichtung (4) geneigt ist;
**dadurch gekennzeichnet, dass** der Rand des Nutzfeldes (8) der am Austritt der Untereinheit (1) gelegenen Kamera (7) in einer zur Vorschubebene des Förderers (3) parallelen Ebene in einem Abstand (d) vom hinteren Ende (12) der Lichtquelle (5) verläuft, der kleiner als die maximale Abmessung (D) des Objekts (2) ist.

3. Maschine nach einem der Ansprüche 1 oder 2, **dadurch gekennzeichnet, dass** die Untereinheit (1) auf Höhe eines der Enden (11, 12) der Lichtquelle (5) eine obere Kamera (27) und eine untere Kamera (28) umfasst, von denen einer der Ränder (13, 14) ihres jeweiligen Nutzfeldes (8, 18) in einem Abstand vom Ende (11, 12) der Lichtquelle (5) verläuft, der kleiner als die maximale Abmessung des Objekts (2) ist.

4. Maschine nach Anspruch 3, **dadurch gekennzeichnet, dass** die Untereinheit (1) zwei Gruppen von zwei Kameras (27, 28) umfasst, wobei jede Gruppe eine obere Kamera (27) und eine untere Kamera (28) umfasst, die jeweils in Nähe eines Endes (11, 12) der Lichtquelle (5) angeordnet sind.

5. Maschine nach Anspruch 3, **dadurch gekennzeichnet, dass** die Ausrichtung der Zielachsen (20, 30) der beiden Kameras (27, 28) in einer zur Vorschubebene des Förderers (3) parallelen Ebene verschieden ist.

6. Maschine nach Anspruch 3, **dadurch gekennzeichnet, dass** die obere Kamera (27) auf einem in vertikaler Translation beweglichen motorbetriebenen Halter (31) angeordnet ist.

7. Maschine nach Anspruch 3, **dadurch gekennzeichnet, dass** die Zielachse (20) der obere Kamera (37) mit Hilfe eines Spiegels (31) abgelenkt wird.

8. Maschine nach Anspruch 7, **dadurch gekennzeichnet, dass** der Spiegel (31) auf einem drehbeweglichen motorbetriebenen Halter (32) angeordnet ist.

9. Maschine nach Anspruch 3, **dadurch gekennzeichnet, dass** die Ausrichtung der Zielachse (20) der oberen Kamera (27, 37) zur Außenfläche (22) eines oberen Teils (23) des Objekts (2) senkrecht ist.

10. Maschine nach einem der Ansprüche 1 oder 2, **dadurch gekennzeichnet, dass** sie zwei Untereinheiten (1a, 1b) umfasst, die zu beiden Seiten des Förderers (3) umgekehrt zueinander angeordnet sind.

11. Maschine nach Anspruch 10, **dadurch gekennzeichnet, dass** die Untereinheiten (1a, 1b) mit Klappen (42, 43) versehen sind, um die durch die Reflexion des Lichts an den transparenten Objekten (2) verursachten Interferenzen zwischen den beiden Untereinheiten (1a, 1b) zu verhindern.

12. Maschine nach Anspruch 10, **dadurch gekennzeichnet, dass** die Untereinheiten (1a, 1b) jeweils ein Paar von zusätzlichen Kameras (44, 45) und (46, 47) umfassen, wobei diese zusätzlichen Kameras (44, 45) und (46, 47) auf Höhe jeder Untereinheit (1a, 1b) untereinander angeordnet sind und jeweils eine Zielachse (48, 49) und (50, 51) umfassen, deren Ausrichtung zur Vorschubrichtung senkrecht ist.
